# FASCICULE DE BREVET EUROPEEN

(11) **EP 3 192 712 B1**
(45) Date de publication et mention de la délivrance du brevet: **30.10.2019**
(21) Numéro de dépôt: 17150064.8
(22) Date de dépôt: 02.01.2017
(51) Int. Cl.: B60S 1/40

(54) **ADAPTATEUR POUR RELIER UN BALAI D'ESSUIE-GLACE À UN BRAS D'ENTRAÎNEMENT**
ADAPTER ZUM VERBINDEN EINES SCHEIBENWISCHERS MIT EINEM ANTRIEBSARM
ADAPTER FOR CONNECTING A WIPER BLADE TO A DRIVING ARM

(30) Priorité: 13.01.2016 FR 1650256
(43) Date de publication de la demande: 19.07.2017
(73) Titulaire: Valeo Systèmes d'Essuyage, 78322 Le Mesnil Saint Denis (FR)
(72) Inventeur: HOUSSAT, Stéphane, 63112 BLANZAT (FR); JOMARD, Olivier, 63170 AUBIERE (FR); GAUCHER, Vincent, 63720 ENNEZAT (FR)
(74) Mandataire: Vincent, Catherine Marie Marguerite

(56) Documents cités:
- EP-A2- 1 911 641
- FR-A1- 2 848 956
- GB-A- 2 019 203
- US-A1- 2004 123 414
- US-A1- 2011 247 166

## Description

La présente invention concerne notamment un adaptateur pour relier un balai d'essuie-glace à un bras d'entraînement, en particulier de véhicule automobile.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un adaptateur et un connecteur. Le connecteur est une pièce qui est solidarisée au balai et qui peut être intégré au balai. Le connecteur est fixé directement sur la lame racleuse ou sur le *flat blade,* alors que l'adaptateur est solidaire du bras. L'adaptateur est une pièce intermédiaire qui permet la liaison et la fixation du connecteur sur le bras d'entraînement. Il est configuré pour coopérer avec une tête ou pièce terminale du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tel que le connecteur, comprend en général un axe physique sensiblement cylindrique qui définit l'axe d'articulation et qui est reçu dans un logement de forme complémentaire de l'autre organe.

Dans certains cas, l'adaptateur est monté dans un logement du connecteur ou du balai et comprend deux parois sensiblement parallèles et à distance l'une de l'autre, reliées ensemble par au moins un élément de liaison. Les parois de l'adaptateur comportent des faces latérales internes entre lesquelles s'étend cet élément de liaison, et des faces latérales externes qui sont destinées à être situées en regard de faces latérales internes du logement du connecteur ou du bras, et à coopérer par glissement avec ces faces lors du pivotement de l'adaptateur vis-à-vis du connecteur ou du balai.

L'adaptateur peut en outre comporter un élément de butée qui est porté par l'une de ses parois latérales et qui est au moins en partie en saillie vis-à-vis de la face latérale externe de cette paroi. Le brevet EP-B12 027 000 montre un tel élément de butée. Lorsque l'adaptateur est monté dans le logement du connecteur, il est apte à tourner autour de l'axe d'articulation précité. L'élément de butée de l'adaptateur est destiné à coopérer avec le connecteur pour limiter la course de l'adaptateur autour de cet axe à un débattement angulaire déterminé. Ceci permet à l'adaptateur de conserver une position facilitant le montage de l'adaptateur sur le bras d'entraînement. La coopération entre l'élément de butée et le connecteur n'est donc recherchée que pour aider l'utilisateur au montage de l'adaptateur et donc en général du balai. Il n'est en général pas utilisé lors du fonctionnement du balai. En particulier, il n'est en général pas utilisé pour limiter le débattement angulaire du balai vis-à-vis du bras lors de l'essuyage d'une vitre par le balai. GB-A-2019203 montre le préambule de la revendication 1.

L'invention propose un perfectionnement à cette technologie.

L'invention propose à cet effet un adaptateur pour relier un balai d'essuie-glace à un bras d'entraînement, l'adaptateur comprenant deux parois sensiblement parallèles reliées ensemble par au moins un élément de liaison, lesdites parois comportant des premières faces latérales internes entre lesquelles s'étend ledit au moins un élément de liaison, et des faces latérales externes, ledit adaptateur comportant en outre au moins un élément de butée qui est porté par l'une desdites parois et qui est au moins en partie en saillie vis-à-vis de ladite face latérale externe de cette paroi, caractérisé en ce que ledit au moins un élément est mobile entre une position fonctionnelle de butée et une position non fonctionnelle. Selon l'invention, l'élément est relié par une charnière à la dite paroi, celle-ci définissant un axe d'articulation sensiblement parallèle à un axe d'allongement de l'adaptateur et ladite paroi comprend un bord longitudinal supérieur comportant une extrémité longitudinale relié à une extrémité supérieure d'un second bord sensiblement perpendiculaire audit premier bord, et dont l'extrémité inférieure est reliée à une extrémité longitudinale d'un troisième bord longitudinal supérieur, ledit au moins un élément étant reliée audit troisième bord longitudinal supérieur.

L'élément de butée peut être mis en position non fonctionnelle lors du fonctionnement du balai d'essuie-glace.

L'adaptateur selon l'invention peut comprendre une ou plusieurs des caractéristiques suivantes, prises isolément les unes des autres ou en combinaison les unes avec les autres :
- ledit au moins un élément est escamotable,
- ledit élément est formé d'une seule pièce avec ladite paroi, et la charnière est réalisée par un film mince de matière reliant la paroi audit élément,
- ledit film de matière est situé au fond d'une gorge à section en forme de U, C ou V,
- ladite charnière définit un axe d'articulation de l'élément, qui est sensiblement perpendiculaire à un axe d'articulation de l'adaptateur,
- ladite charnière est configurée pour autoriser au moins un déplacement dudit au moins un élément vers l'intérieur de l'adaptateur.
- ledit élément a une forme générale en L et comprend une première portion s'étendant sensiblement dans un plan de la paroi, et une seconde portion en saillie de butée vis-à-vis de la face latérale externe de cette paroi,
- ledit au moins un élément est écarté dudit second bord,
- ledit au moins un élément a une extrémité supérieure alignée sensiblement avec ledit premier bord supérieur, ou s'étendant sensiblement dans le prolongement dudit premier bord supérieur, et
- ledit au moins un élément a, lorsqu'il est dans sa position fonctionnelle de butée, une face latérale interne sensiblement alignée avec la face latérale interne de la paroi, et une face latérale externe sensiblement alignée avec la face latérale externe de la paroi.

La présente invention concerne également un balai d'essuie-glace, caractérisé en ce qu'il comprend ou porte un adaptateur tel que décrit ci-dessus.

La présente invention concerne encore un bras d'essuie-glace, caractérisé en ce qu'il comprend ou porte un adaptateur tel que décrit ci-dessus.

Le bras peut être un bras crochet qui est monté entre les parois latérales de l'adaptateur et est apte à empêcher le déplacement dudit au moins un élément depuis sa position fonctionnelle de butée jusqu'à sa position non fonctionnelle.

Le bras peut comporter une tige sensiblement cylindrique qui est engagée dans un logement de l'adaptateur, ce bras étant apte à autoriser le déplacement dudit au moins un élément depuis sa position fonctionnelle de butée jusqu'à sa position non fonctionnelle.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective éclatée d'un balai d'essuie-glace, cet essuie-glace étant équipé d'un adaptateur de connexion du balai à un bras d'entraînement,
- la figure 2 est une vue schématique en perspective d'un adaptateur, d'un connecteur et d'une extrémité d'un bras d'entrainement,
- la figure 3 est une autre vue schématique en perspective de l'adaptateur de la figure 2,
- les figures 4a à 4e sont des vues schématiques en perspective d'un adaptateur selon l'invention,
- les figures 5a et 5b sont des vues schématiques en perspective de l'adaptateur des figures 4a-4e associé à un premier bras crochet d'essuie-glace, et
- les figures 6a, 6b et 6c sont des vues schématiques en perspective de l'adaptateur des figures 4a-4e associé à un second bras crochet d'essuie-glace.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

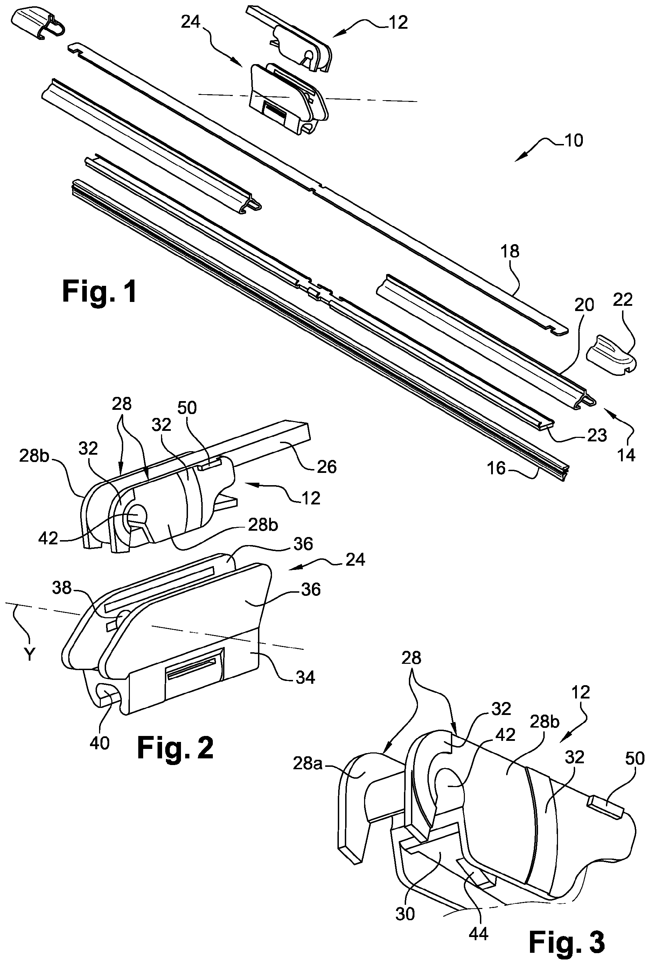

Il est illustré à la figure 1 un balai d'essuie-glace 10 équipé d'un adaptateur 12.

Le balai 10 est du type *flat blade* dans l'exemple représenté et comprend un corps longitudinal 14, une lame d'essuyage 16, en général en caoutchouc, et au moins une vertèbre 18 qui rigidifie la lame et favorise son application sur une vitre telle qu'un pare-brise de véhicule.

Le corps 14 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 10 peut comprendre en outre des embouts d'extrémité 22 ou agrafes d'accrochage de la lame 16 et de la vertèbre 18 sur le corps 14, ces embouts 22 étant situés à chacune des extrémités longitudinales du corps 14.

Le balai 10 comprend également un élément 23 de fixation de la lame 16, qui est logé dans le corps 14.

Le balai 10 comprend sensiblement en son milieu un connecteur 24 qui est destiné à recevoir l'adaptateur 12, l'ensemble connecteur-adaptateur formant un système de connexion du balai 10 à un bras d'entraînement (non représenté en figure 1).

L'adaptateur 12 est monté sur le connecteur 24 de façon à garder un degré de liberté en pivotement autour d'un axe d'articulation Y qui est un axe transversal sensiblement perpendiculaire à l'axe longitudinal du balai 10. Ce degré de liberté autorise un pivotement du balai 10 vis-à-vis du bras et permet ainsi au balai de suivre la courbure du pare-brise lors de ses déplacements.

Le bras 26, visible à la figure 2, est destiné à être entraîné par un moteur pour suivre un mouvement angulaire de va-et-vient permettant d'évacuer l'eau et éventuellement d'autres éléments indésirables recouvrant le pare-brise. Son extrémité libre de liaison à l'adaptateur 12 forme un crochet en U dans l'ouverture duquel est destiné à être monté l'adaptateur 12.

L'adaptateur 12 comprend deux parois latérales parallèles 28 qui sont à distance l'une de l'autre et reliées ensemble par au moins une paroi transversale 30 (figure 3). Les parois 28 comportent des faces latérales internes 28a entre lesquelles s'étend la paroi transversale 30, et des faces latérales externes 28b comportant des motifs en saillie 32.

Le connecteur 24, mieux visible à la figure 2, comprend un socle 34 de forme sensiblement parallélépipédique surmonté de deux parois latérales 36 qui s'étendent dans le prolongement supérieur des faces latérales du socle et qui ont vocation à venir enserrer les parois latérales 28 de l'adaptateur une fois que ce dernier est encliqueté dans le connecteur 24.

L'écartement entre les parois 36 du connecteur 24 est en conséquence légèrement supérieur à celui existant entre les faces latérales externes 28b de l'adaptateur. Entre les deux parois 36 s'étend un axe transversal 38 définissant l'axe Y et autour duquel l'adaptateur 12 a vocation à tourner dans des limites angulaires prédéfinies. Enfin, la partie inférieure du socle 34 est découpé d'une rainure 40 de montage du reste du balai 10, et en particulier de l'élément de fixation 23.

La figure 3 montre d'autres détails de l'adaptateur 12 et en particulier de sa paroi transversale 30. A son extrémité externe, la paroi 30 se prolonge longitudinalement par une goulotte 42 semi-cylindrique de révolution destinée à recevoir l'axe transversal 38 du connecteur lors de l'encliquetage de celui-ci sur l'adaptateur. Pour assurer cet encliquetage, l'ouverture de la goulotte 42 est légèrement inférieure à 180°, de façon qu'il faille exercer une force pour faire entrer l'axe 38 dans la goulotte 42.

Sur la figure 3 est également visible un ergot 44 positionné sur la paroi transversale 30, qui permet, en coopération avec un orifice (non représenté) pratiqué dans la partie terminale en forme de U du bras 26, de solidariser ce dernier avec l'adaptateur 12.

Le montage de l'adaptateur 12 peut être réalisé de la façon suivante. Il est inséré entre les parois 36 du connecteur 24 jusqu'à ce que l'axe 38 s'encliquète dans la goulotte 42 de l'adaptateur, puis le bras 26 est engagé sur l'adaptateur de façon à ce que sa partie terminale obture l'ouverture de la goulotte 42 (figure 2) et empêche la désolidarisation de l'adaptateur du connecteur.

Les motifs en saillie 32 des faces externes 28b de l'adaptateur 12 ont pour fonction de coopérer par glissement avec les faces internes en regard des parois 36 du connecteur, afin notamment de guider le pivotement autour de l'axe Y du balai 10 vis-à-vis du bras 26 en fonctionnement.

L'adaptateur 12 comprend en outre un élément de butée 50 visible aux figures 2 et 3. Cet élément de butée 50 est situé sur une des parois latérales 28 de l'adaptateur et est en saillie sur la face externe 28b de cette paroi. Il a une forme générale parallélépipédique dont l'épaisseur ou dimension transversale, mesurée dans une direction parallèle à l'axe Y, est supérieure à celle des motifs 32.

En position de montage et d'encliquetage de l'adaptateur 12 dans le connecteur 24, l'élément de butée 50 est apte à coopérer par butée avec le bord longitudinal supérieur d'une des parois latérales 36 du connecteur 24, afin de limiter le débattement angulaire de l'adaptateur autour de l'axe Y vis-à-vis du connecteur, dans au moins un sens (par exemple horaire).

Dans la technique actuelle telle qu'illustrée par les figures 2 et 3, cet élément en saillie 50 est fixe.

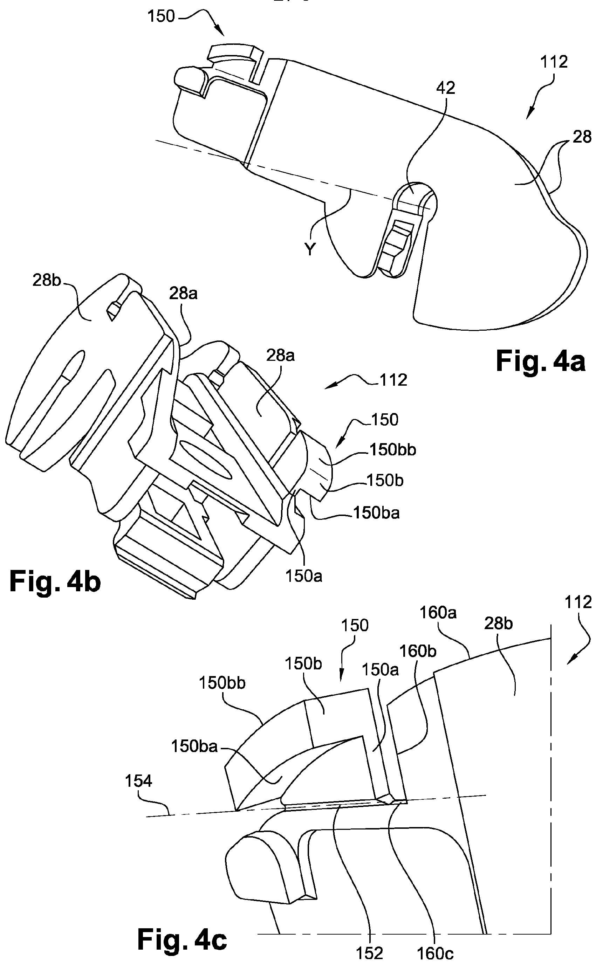

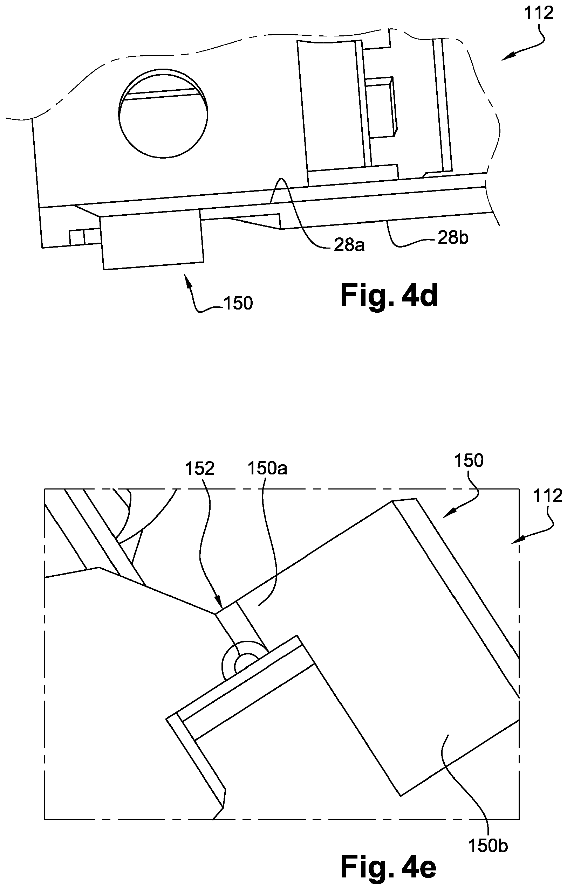

L'invention propose un perfectionnement de cette technologie et montre un mode de réalisation de l'adaptateur selon l'invention aux figures 4a à 4e.

L'adaptateur 112 des figures 4a à 4e peut comprendre toutes les caractéristiques de l'adaptateur 12, décrites dans ce qui précède, et diffère de cet adaptateur par l'élément en saillie 150 qui est ici configuré pour être déplaçable entre une position fonctionnelle de butée et une position non fonctionnelle.

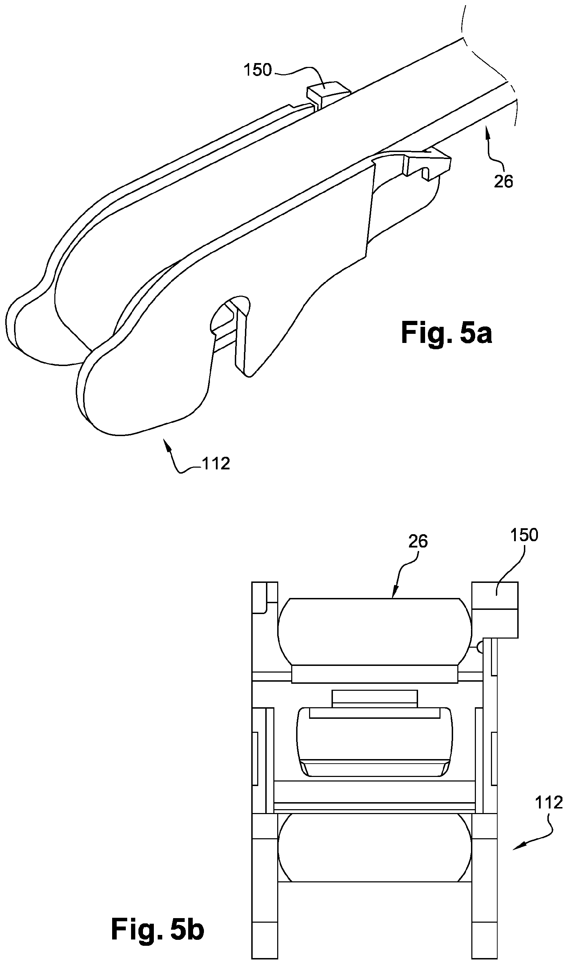

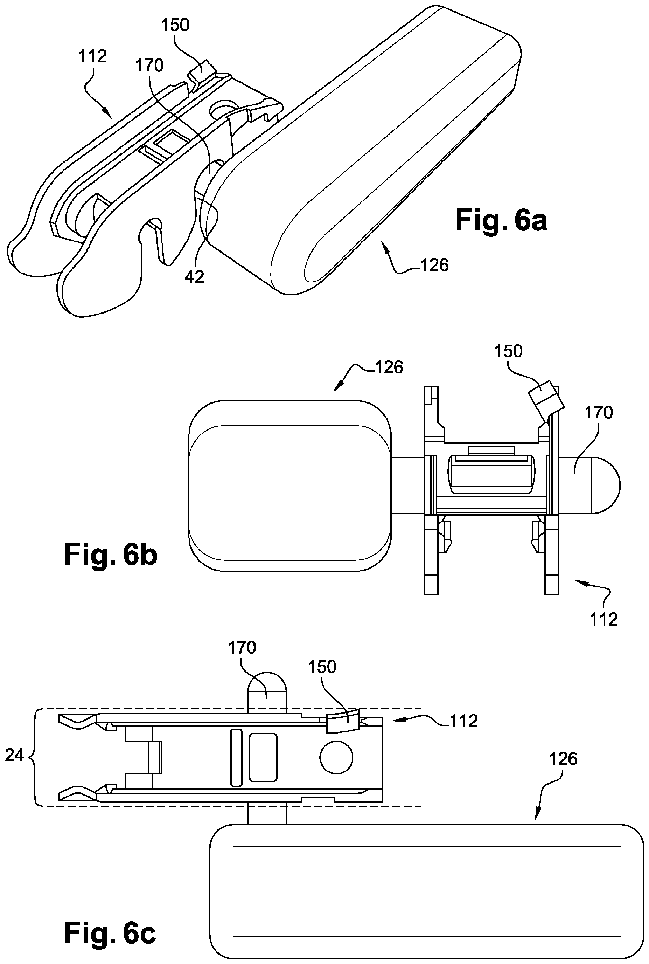

Dans l'exemple représenté, l'élément 150 est escamotable. Dans sa position fonctionnelle visible aux figures 4a à 4e, ainsi qu'aux figures 5a et 5b, il est au moins en partie en saillie sur la face externe 28b de la paroi latérale 28 correspondante de l'adaptateur. Dans sa position non fonctionnelle visible aux figures 6a et 6b, il a été déplacé en direction transversale vers l'intérieur de l'adaptateur.

L'élément 150 est ici formé d'une seule pièce avec la paroi 28. Il est relié à la paroi par une charnière 152. Cette charnière 152 a une forme allongée et définit un axe 154 d'articulation ou de déplacement en rotation de l'élément, qui est sensiblement parallèle à un axe d'allongement de l'adaptateur et sensiblement perpendiculaire à l'axe Y d'articulation de l'adaptateur.

La charnière 152 est réalisée par un film mince de matière reliant la paroi 28 à l'élément 150. Comme on le voit aux figures 4c et 4e, la charnière et le film mince sont définis par une gorge sensiblement rectiligne qui a en section une forme sensiblement en C, U ou V. Cette gorge débouche vers l'extérieur de l'adaptateur. En variante, elle pourrait déboucher à l'intérieur de l'adaptateur.

La charnière 152 est configurée pour autoriser le déplacement de l'élément 150 dans une direction sensiblement transversale, vers l'intérieur de l'adaptateur, c'est-à-dire du côté opposé à la paroi latérale 28 opposée à celle portant l'élément 150.

Dans l'exemple représenté, l'élément 150 a une forme générale en L et comprend une première portion 150a s'étendant sensiblement dans un plan de la paroi 28, et une seconde portion 150b sensiblement perpendiculaire. Cette seconde portion 150b est en saillie vis-à-vis de la face latérale externe 28b de cette paroi 28, et est apte à venir en butée sur un connecteur comme dans la technique antérieure.

Lorsque l'élément 150 est dans sa position fonctionnelle, la première portion 150a comprend une face latérale externe sensiblement parallèle à la face externe 28b de la paroi, et une face latérale interne sensiblement parallèle à la face interne 28a de la paroi. Les faces latérales de l'élément 150 peuvent être alignées avec les faces latérales 28a, 28b de la paroi, respectivement.

La seconde portion 150b peut présenter une forme générale incurvée et comprendre deux surfaces cylindriques orientées respectivement vers le bas 150ba et vers le haut 150bb. La surface 150ba est une surface de butée destinée à coopérer avec le bord longitudinal supérieur de la paroi 36 du connecteur 24, comme expliqué dans ce qui précède.

La paroi 28 de l'adaptateur qui est reliée à l'élément 150 comprend un premier bord longitudinal supérieur 160a reliée à une extrémité longitudinale à une extrémité supérieure d'un second bord 160b sensiblement perpendiculaire audit premier bord, et dont l'extrémité inférieure est reliée à une extrémité longitudinale d'un troisième bord longitudinal supérieur 160c.

L'élément 150 est relié au troisième bord 160c. Il est écarté du second bord 160b. La surface 150bb de l'élément 150 est alignée sensiblement avec le premier bord 160a, ou s'étend sensiblement dans le prolongement de ce premier bord 160a.

Les figures 5a et 5b montrent l'adaptateur 112 monté sur un bras 26 d'entraînement d'un balai d'essuie-glace, ce bras étant un bras crochet. Ce bras comprend une barre en général métallique dont l'extrémité libre est pliée et recourbée pour former un U. Cette extrémité libre du bras est destinée à être montée sur l'adaptateur, en s'étendant entre les parois 28 et autour de leur élément de liaison précité, comme représenté dans les dessins.

En position de montage, le bras 26 prend appui ou peut prendre appui en direction transversale sur la face latérale interne de l'élément 150, qui est ainsi empêché de se déplacer vers l'intérieur de l'adaptateur. Un utilisateur qui tenterait de déplacer l'élément 150 ne pourrait donc pas y parvenir.

Les figures 6a à 6c montrent l'adaptateur 112 monté sur un autre bras 126 d'entraînement d'un balai d'essuie-glace. Ce bras comporte une tige 170 sensiblement cylindrique qui s'étend en direction transversale depuis un côté du bras et qui est engagée dans la goulotte 42 de l'adaptateur.

Dans ce cas de figure, le bras 126, ni même le connecteur 24 dans lequel est monté l'adaptateur, ne gênent le déplacement de l'élément 150 qui peut donc être déplacé jusqu'à sa position non fonctionnelle à l'intérieur de l'adaptateur.

## Revendications

1. Adaptateur (112) pour relier un balai (10) d'essuie-glace à un bras d'entraînement (26), l'adaptateur comprenant deux parois (28) sensiblement parallèles reliées ensemble par au moins un élément de liaison (30), lesdites parois comportant des premières faces latérales internes (28a) entre lesquelles s'étend ledit au moins un élément de liaison, et des faces latérales externes (28b), ledit adaptateur comportant en outre au moins un élément de butée qui est porté par l'une desdites parois, qui est au moins en partie en saillie vis-à-vis de ladite face latérale externe de cette paroi, et qui est relié par une charnière (152) à ladite paroi (28), ledit au moins un élément (150) étant mobile entre une position fonctionnelle de butée et une position non fonctionnelle, ladite charnière (152) définissant un axe d'articulation (154) de l'élément, qui est sensiblement parallèle à un axe d'allongement de l'adaptateur, **caractérisé en ce que** ladite paroi (28) comprend un premier bord longitudinal supérieur (160a) comportant une extrémité longitudinale reliée à une extrémité supérieure d'un second bord (160b) sensiblement perpendiculaire audit premier bord, et dont l'extrémité inférieure est reliée à une extrémité longitudinale d'un troisième bord longitudinal supérieur (160c), et **en ce que** ledit au moins un élément (150) est reliée audit troisième bord longitudinal supérieur.

2. Adaptateur (112) selon la revendication précédente, dans lequel l'axe d'articulation (154) de l'élément (150) est sensiblement perpendiculaire à un axe d'articulation (Y) de l'adaptateur.

3. Adaptateur (112) selon l'une quelconque des revendications précédentes, dans lequel ledit au moins un élément (150) est escamotable.

4. Adaptateur (112) selon l'une quelconque des revendications précédentes, dans lequel ledit élément (150) est formé d'une seule pièce avec ladite paroi (28), et la charnière (152) est réalisée par un film mince de matière reliant la paroi audit élément.

5. Adaptateur (112) selon la revendication précédente, dans lequel ledit film de matière est situé au fond d'une gorge à section en forme de U, C ou V.

6. Adaptateur (112) selon l'une quelconque des revendications précédentes, dans lequel ladite charnière (152) est configurée pour autoriser au moins un déplacement dudit au moins un élément (150) vers l'intérieur de l'adaptateur.

7. Adaptateur (112) selon l'une des revendications précédentes, dans lequel ledit élément (150) a une forme générale en L et comprend une première portion (150a) s'étendant sensiblement dans un plan de la paroi, et une seconde portion (150b) en saillie de butée vis-à-vis de la face latérale externe (28b) de cette paroi (28).

8. Adaptateur (112) selon l'une quelconque des revendications précédentes, dans lequel ledit au moins un élément (150) est écarté dudit second bord (160b).

9. Adaptateur (112) selon l'une quelconque des revendications précédentes, dans lequel ledit au moins un élément (150) a une extrémité supérieure alignée sensiblement avec ledit premier bord supérieur (160a), ou s'étendant sensiblement dans le prolongement dudit premier bord supérieur.

10. Adaptateur selon l'une des revendications précédentes, dans lequel ledit au moins un élément (150) a, lorsqu'il est dans sa position fonctionnelle de butée, une face latérale interne sensiblement alignée avec la face latérale interne (28a) de la paroi (28), et une face latérale externe sensiblement alignée avec la face latérale externe (28b) de la paroi.

11. Balai (10) d'essuie-glace, **caractérisé en ce qu'**il comprend ou porte un adaptateur (112) selon l'une des revendications précédentes.

12. Bras (26, 126) d'essuie-glace, **caractérisé en ce qu'**il comprend ou porte un adaptateur (112) selon l'une des revendications 1 à 10.

13. Bras (26) selon la revendication précédente, ce bras étant un bras crochet qui est monté entre les parois latérales de l'adaptateur et est apte à empêcher le déplacement dudit au moins un élément (150) depuis sa position fonctionnelle de butée jusqu'à sa position non fonctionnelle.

14. Bras (126) selon la revendication 12, ce bras comportant une tige sensiblement cylindrique qui est engagée dans un logement de l'adaptateur, ce bras étant apte à autoriser le déplacement dudit au moins un élément (150) depuis sa position fonctionnelle de butée jusqu'à sa position non fonctionnelle.

## Patentansprüche

1. Adapter (112) zum Verbinden eines Scheibenwischerblattes (10) mit einem Antriebsarm (26), wobei der Adapter zwei im Wesentlichen parallele Wände (28) umfasst, die durch mindestens ein Verbindungselement (30) miteinander verbunden sind, wobei die Wände erste Innenseitenflächen (28a) aufweisen, zwischen denen sich das mindestens eine Verbindungselement erstreckt, und Außenseitenflächen (28b), wobei der Adapter ferner mindestens ein Anschlagelement umfasst, das von einer der Wände getragen wird, das zumindest teilweise zur Außenseitenfläche der Wand vorsteht und das durch ein Scharnier (152) mit der Wand (28) verbunden ist, wobei das mindestens eine Element (150) zwischen einer funktionalen Anschlagposition und einer nicht-funktionalen Position beweglich ist, wobei das Scharnier (152) eine Gelenkachse (154) des Elements definiert, die im Wesentlichen parallel zu einer Verlängerungsachse des Adapters ist, **dadurch gekennzeichnet, dass** die Wand (28) eine erste obere Längskante (160a) mit einem Längsende umfasst, das mit einem oberen Ende einer zweiten Kante (160b) verbunden ist, die im Wesentlichen senkrecht zu der ersten Kante verläuft, und deren unteres Ende mit einem Längsende einer dritten oberen Längskante (160c) verbunden ist, und dass das mindestens eine Element (150) mit der dritten oberen Längskante verbunden ist.

2. Adapter (112) nach dem vorhergehenden Anspruch, wobei die Gelenkachse (154) des Elements (150) im Wesentlichen senkrecht zu einer Gelenkachse (Y) des Adapters steht.

3. Adapter (112) nach einem der vorhergehenden Ansprüche, wobei das mindestens eine Element (150) einziehbar ist.

4. Adapter (112) nach einem der vorhergehenden Ansprüche, wobei das Element (150) in einem Stück mit der Wand (28) ausgebildet ist und das Scharnier (152) durch einen dünnen Materialfilm hergestellt ist, der die Wand mit dem Element verbindet.

5. Adapter (112) nach dem vorhergehenden Anspruch, wobei sich der Materialfilm am Boden einer Nut mit einem U-, C- oder V-förmigen Querschnitt befindet.

6. Adapter (112) nach einem der vorhergehenden Ansprüche, wobei das Scharnier (152) konfiguriert ist, um mindestens eine Bewegung des mindestens einen Elements (150) zur Innenseite des Adapters zu ermöglichen.

7. Adapter (112) nach einem der vorhergehenden Ansprüche, wobei das Element (150) eine allgemeine L-förmige Form aufweist und einen ersten Abschnitt (150a) umfasst, der sich im Wesentlichen in einer Ebene der Wand erstreckt, und einen zweiten Abschnitt (150b), der als Anschlag zur Außenseitenfläche (28b) dieser Wand (28) vorsteht.

8. Adapter (112) nach einem der vorhergehenden Ansprüche, wobei das mindestens eine Element (150) von der zweiten Kante (160b) beabstandet ist.

9. Adapter (112) nach einem der vorhergehenden Ansprüche, wobei das mindestens eine Element (150) ein oberes Ende aufweist, das im Wesentlichen mit der ersten oberen Kante (160a) ausgerichtet ist oder sich im Wesentlichen in der Verlängerung der ersten oberen Kante erstreckt.

10. Adapter nach einem der vorhergehenden Ansprüche, wobei das mindestens eine Element (150) in seiner funktionellen Anschlagposition eine Innenseitenfläche aufweist, die im Wesentlichen mit der Innenseitenfläche (28a) der Wand (28) ausgerichtet ist, und eine Außenseitenfläche, die im Wesentlichen mit der Außenseitenfläche (28b) der Wand ausgerichtet ist.

11. Scheibenwischerblatt (10), **dadurch gekennzeichnet, dass** es einen Adapter (112) nach einem der vorhergehenden Ansprüche umfasst oder trägt.

12. Scheibenwischerarm (26, 126), **dadurch gekennzeichnet, dass** er einen Adapter (112) nach einem der Ansprüche 1 bis 10 umfasst oder trägt.

13. Arm (26) nach dem vorhergehenden Anspruch, wobei dieser Arm ein Hakenarm ist, der zwischen den Seitenwänden des Adapters montiert ist und in der Lage ist, die Bewegung des mindestens einen Elements (150) aus seiner funktionalen Anschlagposition in seine nicht-funktionale Position zu verhindern.

14. Arm (126) nach Anspruch 12, wobei der Arm einen im Wesentlichen zylindrischen Schaft umfasst, der in ein Gehäuse des Adapters eingreift, wobei der Arm in der Lage ist, es dem mindestens einen Element (150) zu ermöglichen, sich von seiner funktionalen Anschlagposition in seine nicht-funktionale Position zu bewegen.

## Claims

1. Adaptor (112) for connecting a windscreen wiper unit (10) to a driving arm (26), the adaptor comprising two substantially parallel walls (28) connected together by means of at least one connecting element (30), said walls having first, inner, lateral faces (28a) between which said at least one connecting element extends, and outer lateral faces (28b), said adaptor further having at least one stop element which is mounted on one of said walls, which projects at least partially from said outer lateral face of this wall, and which is connected by a hinge (152) to said wall (28), said at least one element (150) being movable between an operational stop position and a non-operational position, said hinge (152) defining a hinging axis (154) of the element, which is substantially parallel to an elongation axis of the adaptor, **characterized in that** said wall (28) comprises a first upper longitudinal edge (160a) having a longitudinal end connected to an upper end of a second edge (160b) which is substantially perpendicular to said first edge and a lower end of which is connected to a longitudinal end of a third upper longitudinal edge (160c), and said at least one element (150) is connected to said third upper longitudinal edge.

2. Adaptor (112) according to the preceding Claim, in which the hinging axis (154) of the element (150) is substantially perpendicular to a hinging axis (Y) of the adaptor.

3. Adaptor (112) according to one of the preceding claims, wherein said at least one element (150) is retractable.

4. Adaptor (112) according to one of the preceding claims, wherein said element (150) is formed as one piece with said wall (28), and the hinge (152) is formed by a thin film of material connecting the wall to said element.

5. Adaptor (112) according to the preceding claim, wherein said film of material is situated at the bottom of a groove with a U, C or V-shaped cross-section.

6. Adaptor (112) according to one of the preceding claims, wherein said hinge (152) is configured to allow at least a displacement of said at least one element (150) towards the inside of the adaptor.

7. Adaptor (112) according to one of the preceding claims, wherein said element (150) has a general L-shaped form and comprises a first portion (150a) extending substantially in a plane of the wall, and a second portion (150b) projecting in the form of a stop from the outer lateral face (28b) of this wall (28).

8. Adaptor (112) according to one of the preceding claims, wherein said at least one element (150) is spaced from said second edge (160b).

9. Adaptor (112) according to one of the preceding claims, wherein said at least one element (150) has an upper end aligned substantially with said first upper edge (160a) or extending substantially as a continuation of said first upper edge.

10. Adaptor according to one of the preceding claims, wherein said at least one element (150) has, when it is in its operational stop position, an inner lateral face substantially aligned with the inner lateral face (28a) of the wall (28), and an outer lateral face (28b) substantially aligned with the outer lateral face (28b) of the wall.

11. Windscreen wiper unit (10), **characterized in that** it comprises or supports an adaptor (112) according to one of the preceding claims.

12. Windscreen wiper arm (26, 126), **characterized in that** it comprises or supports an adaptor (112) according to one of Claims 1 to 10.

13. Arm (26) according to the preceding claim, this arm being a hook arm which is mounted between the lateral walls of the adaptor and is designed to prevent the displacement of said at least one element (150) from its operational stop position into its non-operational position.

14. Arm (126) according to Claim 12, this arm having a substantially cylindrical stem which is engaged inside a seat of the adaptor, this arm being adapted to allow the displacement of said at least one element (150) from its operational stop position into its non-operational position.
